# EUROPEAN PATENT APPLICATION

(11) **EP 4 104 667 A1**
(43) Date of publication of application: **21.12.2022**
(21) Application number: 22176160.4
(22) Date of filing: 30.05.2022
(51) Int. Cl.: A01D 41/14

(54) **SYSTEM AND METHOD FOR STEERING A HARVESTING IMPLEMENT OF AN AGRICULTURAL HARVESTER**

(30) Priority: 15.06.2021 US 202117347781
(71) Applicant: CNH Industrial Belgium NV, 8210 Zedelgem (BE)
(72) Inventor: SEIDERS, Kenneth, New Holland, 17557 (US)
(74) Representative: CNH Industrial IP Department

(57) **Abstract**

An agricultural harvester includes a frame, a feeder coupled to the frame, and a harvesting implement coupled to the feeder. Additionally, the agricultural harvester includes an actuator configured to rotate the harvesting implement relative to the frame between a non-turned position and a turned position. Moreover, the agricultural harvester includes a sensor configured to capture data indicative of a turn being made by the agricultural harvester and a computing system communicatively coupled to the sensor. In this respect, the computing system is configured to determine a magnitude of the turn based on the data captured by the sensor. In addition, the computing system is configured to compare the determined magnitude of the turn to a minimum threshold value and, when the determined magnitude exceeds the minimum threshold value, control the operation of the actuator such that the harvesting implement is rotated to the turned position.

## Description

### FIELD OF THE INVENTION

The present disclosure generally relates to agricultural harvesters and, more particularly, to systems and methods for steering a harvesting implement of an agricultural harvester relative to a frame of the agricultural harvester.

### BACKGROUND OF THE INVENTION

A harvester is an agricultural machine used to harvest and process crops. For instance, a combine harvester may be used to harvest grain crops, such as wheat, oats, rye, barley, corn, soybeans, and flax or linseed. In general, the objective is to complete several processes, which traditionally were distinct, in one pass of the machine over a portion of the field. In this respect, most harvesters are equipped with a detachable header or harvesting implement, which cuts and collects the crop from the field. The harvester also includes a crop processing system, which performs various processing operations (e.g., threshing, separating, etc.) on the harvested crop received from the harvesting implement. Furthermore, the harvester includes a crop tank, which receives and stores the harvested crop after processing.

During a harvesting operation, the agricultural harvester generally makes a series of passes back and forth across the field. In this respect, at the end of each pass, the harvester turns around and travels back across the field in the opposite direction. When making a turn, the harvesting implement, which is typically much wider than the rest of the harvester, may, in certain instances, knock down portions of the standing crop within the field. This has historically required the use of three-point turns in such instances, which slows the harvesting operation down and increases costs. As such, systems have recently been developed that allow the harvesting implement to be steered relative to the frame of the harvester. While such systems work well, further improvements are needed.

Accordingly, an improved system and method for steering a harvesting implement of an agricultural harvester would be welcomed in the technology.

### SUMMARY OF THE INVENTION

Aspects and advantages of the technology will be set forth in part in the following description, or may be obvious from the description, or may be learned through practice of the technology.

In one aspect, the present subject matter is directed to an agricultural harvester. The agricultural harvester includes a frame and a feeder extending between a forward end and an aft end, with the aft end being coupled to the frame. Furthermore, the agricultural harvester includes a harvesting implement coupled to the forward end of the feeder. Additionally, the agricultural harvester includes an actuator configured to rotate the harvesting implement relative to the frame between a non-turned position and a turned position. Moreover, the agricultural harvester includes a sensor configured to capture data indicative of a turn being made by the agricultural harvester and a computing system communicatively coupled to the sensor. In this respect, the computing system is configured to determine a magnitude of the turn based on the data captured by the sensor. In addition, the computing system is configured to compare the determined magnitude of the turn to a minimum threshold value and, when the determined magnitude exceeds the minimum threshold value, control the operation of the actuator such that the harvesting implement is rotated to the turned position.

In another aspect, the present subject matter is directed to a system for steering agricultural harvester implements. The system includes a sensor configured to capture data indicative of a turn being made by an agricultural harvester and a computing system communicatively coupled to the sensor. As such, the computing system is configured to determine a magnitude of the turn based on the data captured by the sensor. Furthermore, the computing system is configured to compare the determined magnitude of the turn to a minimum threshold value. Additionally, when the determined magnitude exceeds the minimum threshold value, the computing system is configured to control an operation of an actuator of the agricultural harvester such that a harvesting implement of the agricultural harvester is rotated relative to a frame of the agricultural harvester from a non-turned position to a turned position.

In a further aspect, the present subject matter is directed to a method for steering agricultural harvester implements. The method includes receiving, with a computing system, sensor data indicative of a turn being made by an agricultural harvester. Moreover, the method includes determining, with the computing system, a magnitude of the turn based on the received sensor data. In addition, the method includes comparing, with the computing system, the determined magnitude of the turn to a minimum threshold value. Furthermore, when the determined magnitude exceeds the minimum threshold value, the method includes controlling, with the computing system, an operation of an actuator of the agricultural harvester such that a harvesting implement of the agricultural harvester is rotated relative to a frame of the agricultural harvester from a non-turned position to a turned position.

These and other features, aspects and advantages of the present technology will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present technology, including the best mode thereof, directed to one of ordinary skill in the art, is set forth in the specification, which makes reference to the appended figures, in which:
FIG. 1 illustrates a partial sectional side view of one embodiment of an agricultural harvester in accordance with aspects of the present subject matter;
FIG. 2 illustrates a diagrammatic top view of one embodiment of an agricultural harvester in accordance with aspects of the present subject matter, particularly illustrating steering actuators coupled between a harvesting implement of the harvester and a feeder of the harvester;
FIG. 3 illustrates a diagrammatic top view of another embodiment of an agricultural harvester in accordance with aspects of the present subject matter, particularly illustrating steering actuators coupled between a feeder of the harvester and a frame of the harvester;
FIG. 4 illustrates a schematic view of one embodiment of a system for steering a harvester implement of an agricultural harvester in accordance with aspects of the present subject matter;
FIG. 5 illustrates a flow diagram providing one embodiment of example control logic for steering a harvester implement of an agricultural harvester in accordance with aspects of the present subject matter;
FIG. 6 illustrates a diagrammatic top view of one embodiment of an agricultural harvester in accordance with aspects of the present subject matter, particularly illustrating a harvesting implement of the harvester at a turned position; and
FIG. 7 illustrates a flow diagram of one embodiment of a method for steering a harvester implement of an agricultural harvester in accordance with aspects of the present subject matter.

Repeat use of reference characters in the present specification and drawings is intended to represent the same or analogous features or elements of the present technology.

### DETAILED DESCRIPTION OF THE DRAWINGS

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

In general, the present subject matter is directed to systems and methods for steering a harvesting implement of an agricultural harvester. As will be described below, the harvester may include a frame and a feeder extending between a forward end and an aft end, with the aft end coupled to the frame. Furthermore, the harvester may include a harvesting implement coupled the forward end of the feeder. Additionally, the harvester may include one or more actuators configured to rotate the harvesting implement relative to the frame between a non-turned position and a turned position.

In several embodiments, a computing system of the disclosed system may be configured to control the operation of the actuator(s) such that harvesting implement is steered when the harvester makes certain turns. More specifically, the computing system may receive sensor data indicative of the turn being made by the agricultural harvester (e.g., from a steering position sensor or a location sensor, such as GPS receiver). Moreover, the computing system may determine the magnitude of the turn based on the received sensor data. Furthermore, the computing system may compare the determined magnitude of the turn to a minimum threshold value. Thereafter, when the determined magnitude exceeds the minimum threshold value, the computing system may control the operation of the actuator(s) such that the harvesting implement is rotated relative to the frame from the non-turned position to the turned position.

Steering or rotating the harvesting implement from the non-turned position to the turned position when the magnitude of a turn being made by the harvester exceeds the minimum threshold value improves the operation of the harvester. More specifically, conventional systems steer the harvesting implement when any change in direction occurs. Thus, conventional systems steer the harvesting implement in response to minor steering inputs (e.g., to straighten the harvester relative to the crops rows) when making a pass across the field. Such steering of the harvesting implement may result in undulating or curving passes across the field and/or excessive wear on the associated actuator(s). However, by comparing the magnitude of the turn being made to a minimum threshold value, the disclosed system and method may steer the harvesting implement only when major changes in direction, such as those associated with turning around at the end of a pass, occur. This may, in turn, result in straighter passes across the field and less wear on the associated actuator(s), thereby improving the operation of the harvester and the efficiency of the harvesting operation.

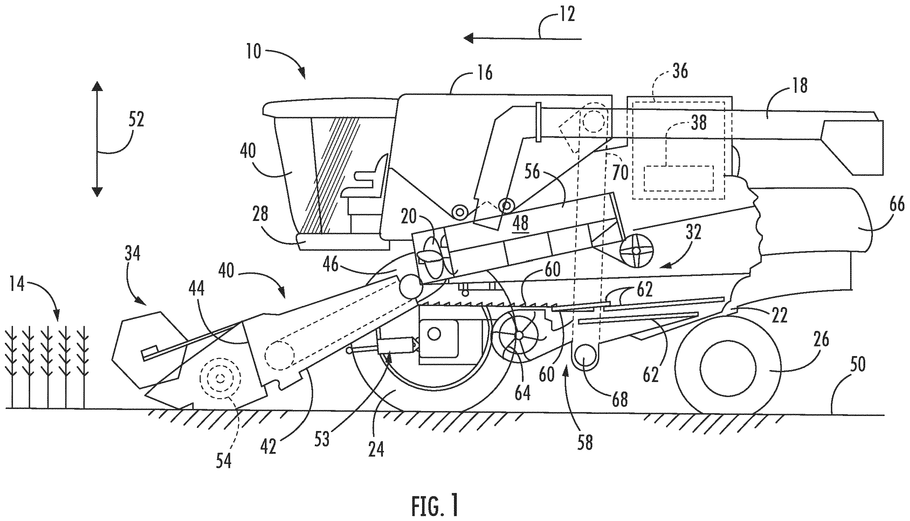

Referring now to the drawings, FIG. 1 illustrates a partial sectional side view of the agricultural harvester 10. In general, the harvester 10 may be configured to travel across a field in a forward direction of travel (indicated by arrow 12) to harvest a crop 14. While traversing the field, the harvester 10 may be configured to process and store the harvested crop within a crop tank 16 of the harvester 10. Furthermore, the harvested crop may be unloaded from the crop tank 16 for receipt by the crop receiving vehicle (not shown) via a crop discharge tube 18 of the harvester 10. Moreover, in the illustrated embodiment, the harvester 10 is configured as an axial-flow type combine in which the harvested crop is threshed and separated while being advanced by and along a longitudinally arranged rotor 20. However, in alternative embodiments, the harvester 10 may have any other suitable harvester configuration, such as a traverse-flow type configuration.

The harvester 10 may include a chassis or main frame 22 configured to support and/or couple to various components of the harvester 10. For example, in several embodiments, the harvester 10 may include a pair of driven, front wheels 24 and a pair of steerable, rear wheels 26 coupled to the frame 22. As such, the wheels 24, 26 may be configured to support the harvester 10 relative to the ground and move the harvester 10 in the forward direction of travel 12. Furthermore, the harvester 10 may include an operator's platform 28 having an operator's cab 30, a crop processing system 32, the crop tank 16, and the crop discharge tube 18 supported by the frame 22. As will be described below, the crop processing system 32 may be configured to perform various processing operations on the harvested crop as the crop processing system 32 transfers the harvested crop between a harvesting implement 34 (e.g., a header) of the harvester 10 and the crop tank 16. Furthermore, the harvester 10 may include an engine 36 and a transmission 38 mounted on the frame 22. The transmission 38 may be operably coupled to the engine 36 and may provide variably adjusted gear ratios for transferring engine power to the wheels 24 via a drive axle assembly (or via axles if multiple drive axles are employed).

Furthermore, as shown in FIG. 1, the harvester 10 includes a feeder 40 that couples to and supports the harvesting implement 34. More specifically, the feeder 40 may include a feeder housing 42 extending from the forward end 44 to an aft end 46. As such, the forward end 44 of the feeder housing 42 may be coupled to harvesting implement 34. Moreover, the aft end 46 of the feeder housing 42 may be coupled to the frame 22 adjacent to a threshing and separating assembly 48 of the crop processing system 32 such that the harvesting implement 34 may move relative to a field surface 50 in a vertical direction (indicated by arrow 52). In several embodiments, the harvester 10 may include one or more lift actuators 53 (e.g., hydraulic cylinder(s)) coupled between the frame 22 and the feeder housing 42. The lift actuator(s) 53 may, in turn, be configured to move the harvesting implement 34 upward and downward along the vertical direction 52, thereby raising and lowering the harvesting implement 34 relative to the field surface 50 (e.g., to adjust cutting height).

As the harvester 10 is propelled in the forward direction of travel 12 over the field with the crop 14, the crop material is severed from the stubble by one or more knives (not shown) positioned on the cutter bar (not shown) at the front of the harvesting implement 34. The crop material is delivered by a header auger 54 to the forward end 44 of the feeder housing 42, which supplies the harvested crop to the threshing and separating assembly 48. In general, the threshing and separating assembly 48 may include a cylindrical chamber 56 in which the rotor 20 is rotated to thresh and separate the harvested crop received therein. That is, the harvested crop is rubbed and beaten between the rotor 20 and the inner surfaces of the chamber 56 to loosen and separate the grain, seed, or the like from the straw.

The harvested crop separated by the threshing and separating assembly 48 may fall onto a crop cleaning assembly 58 of the crop processing system 32. In general, the crop cleaning assembly 58 may include a series of pans 60 and associated sieves 62. In general, the separated harvested crop may be spread out via the oscillation of pans 60 and/or sieves 62 and may eventually fall through apertures defined by the sieves 62. Additionally, a cleaning fan 64 may be positioned adjacent to one or more of the sieves 62 to provide an air flow through the sieves 62 that removes chaff and other impurities from the harvested crop. For instance, the fan 64 may blow the impurities off the harvested crop for discharge from the harvester 10 through the outlet of a straw hood 66 positioned at the back end of the harvester 10. The cleaned harvested crop passing through the sieves 62 may then fall into a trough of an auger 68, which may be configured to transfer the harvested crop to an elevator 70 for delivery to the crop tank 16.

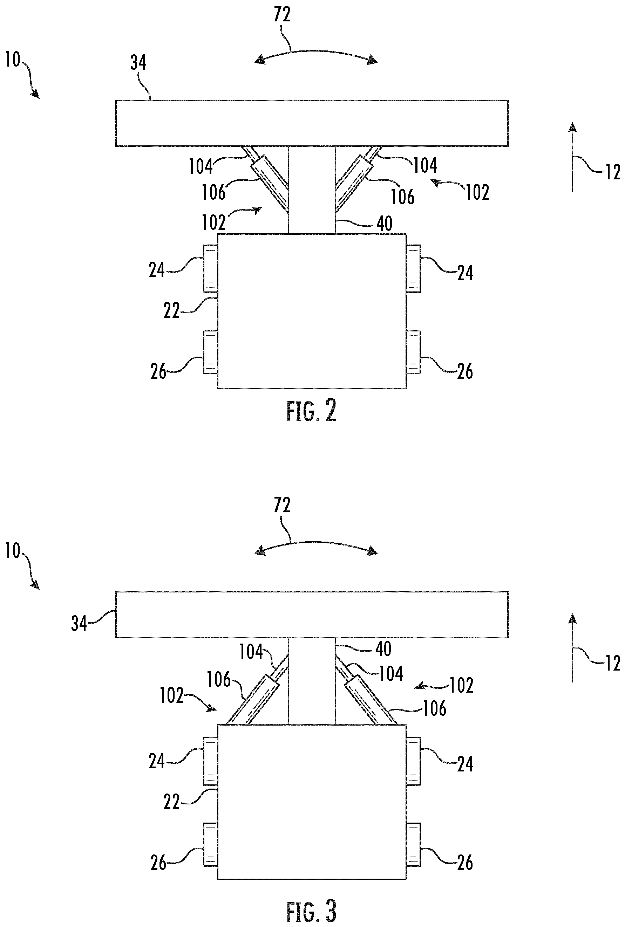

Referring now to FIG. 2, the harvesting implement 34 may be rotatable or otherwise steerable relative to the frame 22 of the harvester 10. In this respect, as will be described below, by rotating the harvesting implement 34 relative to the frame 22 when the harvester 10 is making a turn, the harvester 10 can make the turn in a smaller radius (i.e., a sharper turn), such as when turning around after completing a pass across the field. Specifically, in some embodiments, when steering the harvesting implement 34, the harvesting implement 24 may be rotated relative to the frame 22 (e.g., as indicated by arrow 72) about an axis (not shown) extending generally perpendicular to the field surface 50 such that the harvesting implement 34 moves relative to the frame 22 within a plane (not shown) that is generally parallel to the field surface 50.

In the embodiment shown in FIG. 2, the harvesting implement 34 may be rotatably or otherwise adjustably coupled the forward end 44 of the feeder 40. In such an embodiment, the aft end 46 of the feeder 40 may, in turn, be pivotably coupled to the frame 12 to permit the harvesting implement 34 to raised and lowered along the vertical direction 52 relative to the field surface 50. Thus, when steering the harvesting implement 34, the harvesting implement 34 may be rotated relative to both the feeder 40 and the frame 12. As such, the harvester 10 may include one or more harvesting implement steering actuators 102 coupled between the harvesting implement 34 and the feeder 40. In some embodiments, the steering actuator(s) 102 may correspond to a fluid-driven actuator(s), such as a hydraulic or pneumatic cylinder(s). In such embodiments, a rod(s) 104 of the steering actuator(s) 102 may be extended and/or retracted relative to an associated cylinder(s) 106 of the steering actuator(s) 102 to rotate or turn the harvesting implement 34 relative to the feeder 40 and the frame 22. In this respect, the operation of the steering actuator(s) 102 may be controlled to rotate or turn the harvesting implement 34 relative to both the feeder 40 and the frame 22 from the non-turned position illustrated in FIG. 2 right or the left to a turned position depending on the direction of the turn being made by the harvester 10.

FIG. 3 illustrates another embodiment of the harvesting implement 34 being rotatably coupled to the frame 22. In such an embodiment, the harvesting implement 34 may be non-rotatably coupled to the forward end 44 of the feeder 40. The aft end 46 of the feeder 40 may, in turn, be adjustably coupled the frame 22 such the feeder 40 can be turned or rotated relative to the frame 22 and raised and lowered along the vertical direction 52 relative to the field surface 50. Thus, when steering the harvesting implement 34, the feeder 40 (and the harvesting implement 34 coupled thereto) may be rotated relative to the frame 12. In such an embodiment, the harvesting implement steering actuator(s) 102 may be coupled between the feeder 40 and the frame 22. As such, the rod(s) 104 of the steering actuator(s) 102 may be extended and/or retracted relative to the associated cylinder(s) 106 of the steering actuator(s) 102 to rotate or turn the feeder 40 (and, thus, the harvesting implement 34) relative to the frame 22. In this respect, the operation of the steering actuator(s) 102 may be controlled to rotate or turn both the harvesting implement 34 and the feeder 40 relative to the frame 22 from the non-turned position illustrated in FIG. 2 right or the left to a turned position depending on the direction of the turn being made by the harvester 10.

In the embodiments shown in FIGS. 2 and 3, the harvester 10 includes a pair of steering actuators 102. However, in alternative embodiments, the harvester 10 may include any other suitable number of steering actuators 102, such as a single steering actuator 102 or three or more steering actuators 102. Moreover, in other embodiments, the steering actuator(s) 102 may correspond to any other suitable type of actuator(s), such as an electric linear actuator(s).

It should be further appreciated that the configurations of the agricultural harvester 10 described above and shown in FIGS. 1-3 are provided only to place the present subject matter in an exemplary field of use. Thus, it should be appreciated that the present subject matter may be readily adaptable to any manner of harvester configuration.

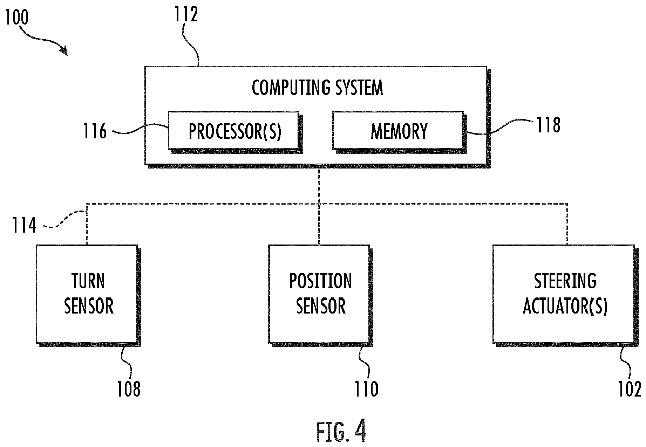

Referring now to FIG. 4, a schematic view of one embodiment of a system 100 for steering a harvester implement of an agricultural harvester is illustrated in accordance with aspects of the present subject matter. In general, the system 100 will be described herein with reference to the agricultural harvester 10 described above with reference to FIGS. 1-3. However, it should be appreciated by those of ordinary skill in the art that the disclosed system 100 may generally be utilized with agricultural harvesters having any other suitable harvester configuration.

As shown in FIG. 4, the system 100 includes the steering actuator(s) 102 of the harvester 10. Moreover, as shown, the system 100 includes a turn sensor 108 of the harvester 10. In general, the turn sensor 108 may be configured to capture data indicative of a turn or other change in direction being made by the harvester 10. For example, in some embodiments, the turn sensor 108 may correspond to a steering angle sensor (e.g., a Hall Effect sensor) provided in operative association with a steering assembly (not shown) of the harvester 10. In such embodiments, the turn sensor 108 may be configured to capture data indicative of the current steering angle of the harvester 10. Based on the current steering angle, the magnitude and direction of a turn being made by the harvester 10 can be determined. Alternatively, in other embodiments, the turn sensor 108 may correspond to a location/positioning sensor, such as a GPS receiver. In such embodiments, the location data (e.g., coordinates) captured by the turn sensor 108 may be used in combination with a stored guidance map to determine the magnitude and direction of a turn being made or to be made by the harvester 10. However, in alternative embodiments, the turn sensor 108 may correspond to any other suitable sensing device configured to capture data indicative of the magnitude and direction of a turn being made or to be made by the harvester 10.

Additionally, in some embodiments, the system 100 may include a position sensor 110. In general, the position sensor 110 may be configured to capture data indicative of the position of the harvesting implement 34 relative to the field surface (e.g., the field surface 50) along the vertical direction (e.g., the vertical direction 52). As will be described below, the position of the harvesting implement 34 along the vertical direction can be used to determine whether the harvesting implement 34 is at a harvesting position or a non-harvesting position. For example, in some embodiments, the position sensor 110 may correspond to a rotary potentiometer in operative association with a pivot joint (not shown) at which the aft end 46 of the feeder 40 is coupled to frame 22 of the harvester 10. However, the position sensor 110 may correspond to any other suitable sensing device configured to capture data indicative of the position of the harvesting implement 34 relative to the field surface along the vertical direction.

In addition, the system 100 may include a computing system 112 communicatively coupled to one or more components of the harvester 10 and/or the system 100 to allow the operation of such components to be electronically or automatically controlled by the computing system 112. For instance, the computing system 112 may be communicatively coupled to the turn sensors 108 via a communicative link 114. As such, the computing system 112 may be configured to receive data from the turn sensor 108 that is indicative of the magnitude and direction of a turn or other change in direction being made by the harvester 10. Furthermore, the computing system 112 may be communicatively coupled to the position 110 via the communicative link 114. In this respect, the computing system 112 may be configured to receive data from the position sensor 110 that is indicative of the position of the harvesting implement 34 relative to the field surface along the vertical direction. Additionally, the computing system 112 may be communicatively coupled to the harvesting implement steering actuator(s) 102 via the communicative link 114. As such, the computing system 112 may be configured to control the operation of the steering actuator(s) 102 to steer or otherwise turn the harvesting implement 34 relative to the frame 22. In addition, the computing system 112 may be communicatively coupled to any other suitable components of the harvester 10 and/or the system 100.

In general, the computing system 112 may comprise one or more processor-based devices, such as a given controller or computing device or any suitable combination of controllers or computing devices. Thus, in several embodiments, the computing system 112 may include one or more processor(s) 116 and associated memory device(s) 118 configured to perform a variety of computer-implemented functions. As used herein, the term "processor" refers not only to integrated circuits referred to in the art as being included in a computer, but also refers to a controller, a microcontroller, a microcomputer, a programmable logic circuit (PLC), an application specific integrated circuit, and other programmable circuits. Additionally, the memory device(s) 118 of the computing system 112 may generally comprise memory element(s) including, but not limited to, a computer readable medium (e.g., random access memory RAM)), a computer readable non-volatile medium (e.g., a flash memory), a floppy disk, a compact disk-read only memory (CD-ROM), a magneto-optical disk (MOD), a digital versatile disk (DVD) and/or other suitable memory elements. Such memory device(s) 118 may generally be configured to store suitable computer-readable instructions that, when implemented by the processor(s) 116, configure the computing system 112 to perform various computer-implemented functions, such as one or more aspects of the methods and algorithms that will be described herein. In addition, the computing system 112 may also include various other suitable components, such as a communications circuit or module, one or more input/output channels, a data/control bus and/or the like.

The various functions of the computing system 112 may be performed by a single processor-based device or may be distributed across any number of processor-based devices, in which instance such devices may be considered to form part of the computing system 112. For instance, the functions of the computing system 112 may be distributed across multiple application-specific controllers or computing devices, such as a navigation controller, an engine controller, a transmission controller, and/or the like.

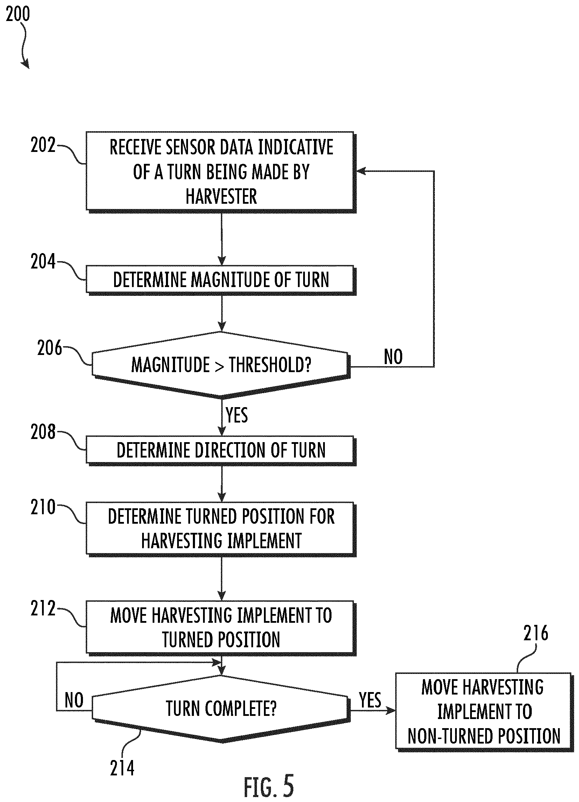

Referring now to FIG. 5, a flow diagram of one embodiment of example control logic 200 that may be executed by the computing system 112 (or any other suitable computing system) for steering a harvester implement of an agricultural harvester is illustrated in accordance with aspects of the present subject matter. Specifically, the control logic 200 shown in FIG. 5 is representative of steps of one embodiment of an algorithm that can be executed to steer a harvester implement of an agricultural harvester in a manner that results in straighter passes across the field and less wear on the associated actuator(s). Thus, in several embodiments, the control logic 200 may be advantageously utilized in association with a system installed on or forming part of an agricultural harvester to allow for real-time harvesting implement steering without requiring substantial computing resources and/or processing time. However, in other embodiments, the control logic 200 may be used in association with any other suitable system, application, and/or the like for steering a harvester implement of an agricultural harvester.

As shown in FIG. 5, at (202), the control logic 200 includes receiving sensor data indicative of a turn being made by an agricultural harvester. Specifically, as mentioned above, in several embodiments, the computing system 112 may be communicatively coupled to the turn sensor 108 via the communicative link 114. In this respect, as the harvester 10 travels across the field to perform a harvesting operation thereon, the computing system 112 may receive data from the turn sensor 108. Such data may, in turn, be indicative of a turn being made by the harvester 10. For example, as mentioned above, in some embodiments, the turn sensor 108 may correspond to a steering angle sensor of the harvester 10. In such embodiments, the computing system 112 may receive steering angle data from the turn sensor 108 via the communicative link 114, with such data being indicative of the current steering angle of the harvester 10. Alternatively, as mentioned above, the turn sensor 108 may correspond to a location sensor, such as GPS receiver. In such embodiments, the computing system 112 may receive location data (e.g., coordinates) from the turn sensor 108 via the communicative link 112 that, in combination with a stored guidance map (e.g., stored within the memory device(s) 118), can be used to determine the magnitude and direction of a turn currently being made or an upcoming turn to be made by the harvester 10. However, in alternative embodiments, the computing system 112 may receive any other suitable sensor data indicative of a turn being made by the harvester 10.

Furthermore, at (204), the control logic 200 includes determining the magnitude of the turn being made by the agricultural harvester based on the received sensor. Specifically, in several embodiments, the computing system 112 may analyze the sensor data received at (202) to determine or estimate the magnitude of the turn being made by the harvester 10. For example, the computing system 112 may include a look-up table(s), suitable mathematical formula, and/or algorithms stored within its memory device(s) 118 that correlates the received sensor data to the magnitude of the turn currently being made by the harvester 10. As will be described below, when the determined magnitude of the turn being made by the harvester 10 exceeds a minimum threshold value, the harvesting implement 34 may be steered relative to the frame 22 of the harvester 10.

In some embodiments, the magnitude of the turn being made by the harvester 10 may be an angle indicative of the amount that the direction of travel 12 is changing. For example, in one embodiment, the magnitude of the turn may be the angle defined between the steerable rear wheels 26 and a longitudinal or fore/aft-extending axis (not shown) of the frame 22. However, in alternative embodiments, the magnitude of the turn may correspond to any other suitable parameter indicative of the sharpness or degree of the turn being made.

In general, during a harvesting operation, the harvester 10 may make various turns or changes in direction. Some of these changes in direction may be small, such as minor steering corrections when making a pass across the field. Steering the harvesting implement 34 relative to frame 22 in such instances may result in an undulating pass across the field (e.g., the edge or line between the standing crop and harvested portion of the field may be undulating), which may then require further steering corrections. Additionally, such minor steering corrections may be frequently performed. Thus, steering the harvesting implement 34 relative to the frame 22 each time a minor steering correction is made may result in increased wear on the harvesting implement steering actuator(s) 102. Conversely, other changes in direction may be much greater, such as when turning around after completing a pass across the field. In such instances, steering the harvesting implement 34 relative to the frame 22 into the turn may reduce the turning radius of harvester 10. This may eliminate the need for three-point turns when reversing the direction of travel across the field to avoid knocking over the standing crop.

In this respect, at (206), the control logic 200 includes comparing the determined magnitude of the turn to a minimum threshold value. For example, the computing system 112 may compare the magnitude of the turn being made the harvester 10 to a minimum threshold value. The minimum threshold value may be set such that the magnitudes of small steering corrections (e.g., those made while making a pass across the field) fall below the value, while the magnitudes of large changes in direction (e.g., those made when turning around after completing a pass across the field) exceed the value. As such, when the magnitude of the turn determined at (204) is equal to or falls below the minimum threshold value, the harvesting implement 34 may not be steered relative to the frame 22 and the control logic 200 returns to (202). In such instances, the harvesting implement 34 remains at the non-turned position (e.g., as shown in FIGS. 2 and 3). When at the non-turned position, the longitudinal axis or longest axis of the harvesting implement 34 may generally be oriented perpendicular or substantially perpendicular relative to the longitudinal or fore/aft extending axis of the frame 22. Conversely, when the magnitude of the turn determined at (204) exceeds the minimum threshold value, the harvesting implement 34 may be steered relative to the frame 22 as will be described below. In such instances, the control logic 200 proceeds to (208).

Additionally, at (208), the control logic 200 includes determining the direction of the turn being made by the agricultural harvester based on the received sensor. Specifically, in several embodiments, the computing system 112 may further analyze the sensor data received at (202) to determine the direction of the turn being made by the harvester 10 (e.g., right or left). For example, the computing system 112 may include a look-up table(s), suitable mathematical formula, and/or algorithms stored within its memory device(s) 118 that correlates the received sensor data to the direction of the turn currently being made by the harvester 10.

Moreover, at (210), the control logic 200 includes determining a turned position to which the harvesting implement 34 will be rotated. Specifically, in several embodiments, the computing system 112 may determine the turned position to which the harvesting implement 34 will be rotated based on the direction of the turn being made by the harvester determined at (208) and/or the magnitude of the turn being made by the harvester determined at (204). For example, the computing system 112 may include a look-up table(s), suitable mathematical formula, and/or algorithms stored within its memory device(s) 118 that correlates the determined direction and/or magnitude of the turn being made by the harvester 10 to the turned position for the harvesting implement 34.

FIG. 5 illustrates the harvester 10 when the harvesting implement 34 is at a turned position. In general, the turned position is a position at which the longitudinal or longest axis of the harvesting implement 34 is oriented at an oblique angle relative to relative to the longitudinal or fore/aft-extending axis of the frame 22. Moreover, when steering the harvesting implement 34 to the turned position, the harvesting implement 34 may be rotated into the turn being made by the harvester 10. For example, as shown in FIG. 5, when the harvester 10 turns right, the turned position is selected such that the harvesting implement 34 is also rotated to the right. Conversely, when the harvester 10 turns left, the turned position is selected such that the harvesting implement 34 is also rotated to the left.

In some embodiments, the computing system 112 may determine the turned position based on both the determined direction and magnitude of the turn being made by the harvester 10. Specifically, in such embodiments, the turned position varies depending on the magnitude of the turn being made by the harvester 10. For example, as the magnitude of the turn being made by the harvester 10 increases, the amount or angle that the harvesting implement 34 is rotated away from the non-turned position increases.

Conversely, in other embodiments, the computing system 112 may determine the turned position based on only the determined direction of the turn being made by the harvester 10. Specifically, in such embodiments, the turned position may be same regardless of the magnitude of the turn being made by the harvester 10 and only vary based on whether the harvester 10 is making a right turn or a left turn. For example, when the harvester 10 makes a right turn having a magnitude exceeding the minimum threshold amount, the harvesting implement 34 may be rotated to the right to the same turned position regardless of much the magnitude exceeds the minimum threshold amount. Conversely, when the harvester 10 makes a left turn having a magnitude exceeding the minimum threshold amount, the harvesting implement 34 may be rotated to the left to the same turned position regardless of much the magnitude exceeds the minimum threshold amount.

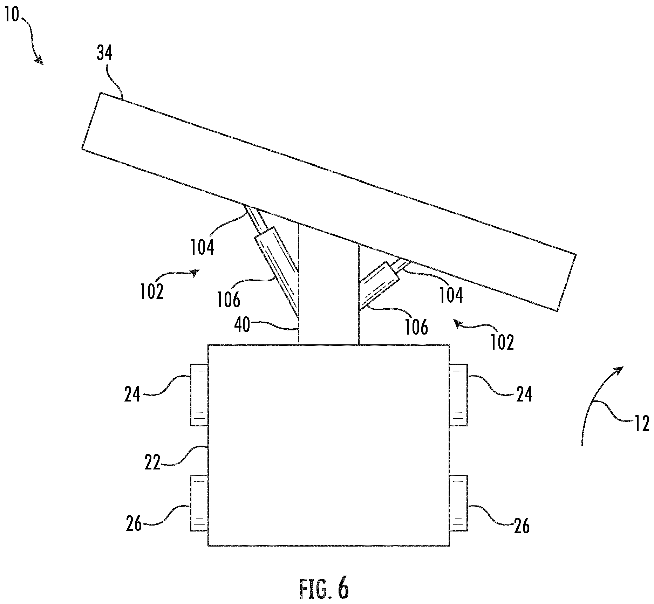

As shown in FIG. 5, at (212), the control logic 200 includes controlling the operation of an actuator of the agricultural harvester such that a harvesting implement of the agricultural harvester is rotated relative to a frame of the agricultural harvester from a non-turned position to a turned position. For example, after the turned position is determined at (210), the computing system 112 may control the operation of the harvesting implement steering actuator(s) 102 such that the harvesting implement 34 is rotated relative to the frame 22 to the turned position (e.g., as shown in FIG. 6).

Furthermore, at (214), the control logic 200 includes determining when the turn being made by the harvester 10 is complete. More specifically, the computing system 112 may continue to receive data from the turn sensor 108 as the turn is being made by the harvester 10. In this respect, the computing system 112 may analyze the receive sensor data to determine when the turn is complete. When it is determined that the turn is not complete at (214), the computing system 112 may pause for a predetermined time period (e.g., 0.5 seconds) before repeating (214).

Conversely, when it is determined that the turn is complete at (214), the control logic 200 includes, at (216), controlling the operation of the actuator such that the harvesting implement is rotated to the non-turned position. For example, after it is determined that the turn is complete at (214), the computing system 112 may control the operation of the steering actuator(s) 102 such that the harvesting implement 34 is rotated relative to the frame 22 to the non-turned position (e.g., as shown in FIGS. 2 and 3). Thereafter, the control logic 200 may return to (202).

Additionally, in several embodiments, the system 100 may be configured to steer the harvesting implement 34 relative to the frame 22 of the harvester 10 based on the vertical position of the harvesting implement 34 in addition to the magnitude and/or direction of the turn being made by the harvester 10. Specifically, in some embodiments, the harvesting implement 34 may not be steered when the harvesting implement 34 is at a non-harvesting position. For example, after determining that the magnitude of the turn being made by the harvester 10 exceeds the minimum threshold value (e.g., at (206)), the computing system 112 may determine whether the harvesting implement 34 is at a harvesting position or a non-harvesting position based on the data captured by the position sensor 110. When it is determined that harvesting implement 34 is at the harvesting position, the harvesting implement 34 may be moved to the turned position (e.g., the control logic 200 proceeds to (208)). Conversely, when it is determined that harvesting implement 34 is at the non-harvesting position, the harvesting implement 34 may remain at the non-turned position (e.g., the control logic 200 returns to (202)). Furthermore, when the harvesting implement 34 is at a turned position and it is subsequently determined that the harvesting implement 34 has been moved to the non-harvesting position, the computing system 112 control the operation of the steering actuator(s) 102 such that the harvesting implement 34 is rotated relative to the frame 22 to the non-turned position.

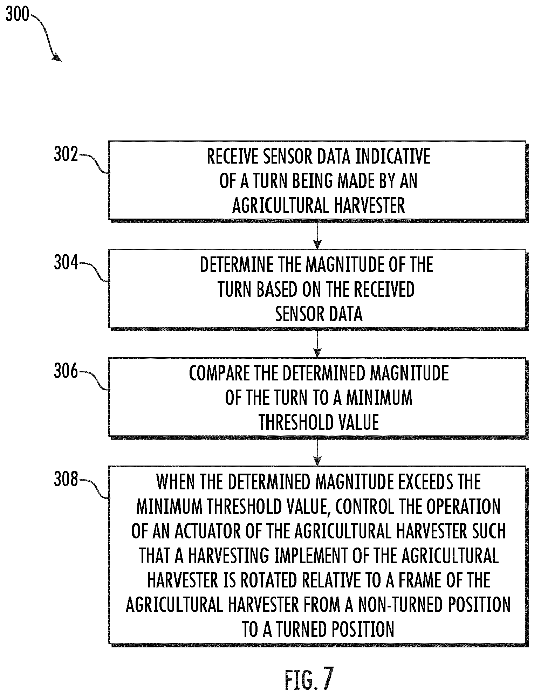

Referring now to FIG. 7, a flow diagram of one embodiment of a method 300 for steer a harvester implement of an agricultural harvester is illustrated in accordance with aspects of the present subject matter. In general, the method 300 will be described herein with reference to the agricultural harvester 10 and the system 100 described above with reference to FIGS. 1-6. However, it should be appreciated by those of ordinary skill in the art that the disclosed method 300 may generally be implemented with any agricultural harvester having any suitable harvester configuration and/or within any system having any suitable system configuration. In addition, although FIG. 7 depicts steps performed in a particular order for purposes of illustration and discussion, the methods discussed herein are not limited to any particular order or arrangement. One skilled in the art, using the disclosures provided herein, will appreciate that various steps of the methods disclosed herein can be omitted, rearranged, combined, and/or adapted in various ways without deviating from the scope of the present disclosure.

As shown in FIG. 7, at (302), the method 300 may include receiving, with a computing system, sensor data indicative of a turn being made by an agricultural harvester. For example, as described above, the computing system 112 may receive data from the turn sensor 108 via the communicative link 114. Such sensor data may, in turn, be indicative of a turn being made by the agricultural harvester 10 as the harvester 10 travels across the field to perform a harvesting operation.

Additionally, at (304), the method 300 may include determining, with the computing system, the magnitude of the turn based on the received sensor data. For example, as described above, the computing system 112 may determine the magnitude of the turn being made by the harvester 10 based on the received sensor data.

Moreover, as shown in FIG. 5, at (306), the method 300 may include comparing, with the computing system, the determined magnitude of the turn to a minimum threshold value. For example, as described above, the computing system 112 may compare the determined magnitude of the turn to a minimum threshold value.

Furthermore, at (308), when the determined magnitude exceeds the minimum threshold value, the method 300 may include controlling, with the computing system, the operation of an actuator of the agricultural harvester such that a harvesting implement of the agricultural harvester is rotated relative to a frame of the agricultural harvester from a non-turned position to a turned position. For example, as described above, when the determined magnitude exceeds the minimum threshold value, the computing system 112 may the operation of the harvesting implement steering actuator(s) 102 such that the harvesting implement 34 of the harvester 10 is rotated relative to the frame 22 of the harvester 10 from a non-turned position (e.g., as shown in FIGS. 2 and 3) to a turned position (e.g., as shown in FIG. 6).

It is to be understood that the steps of the control logic 200 and the method 300 are performed by the computing system 112 upon loading and executing software code or instructions which are tangibly stored on a tangible computer readable medium, such as on a magnetic medium, e.g., a computer hard drive, an optical medium, e.g., an optical disc, solid-state memory, e.g., flash memory, or other storage media known in the art. Thus, any of the functionality performed by the computing system 112 described herein, such as the control logic 200 and the method 300, is implemented in software code or instructions which are tangibly stored on a tangible computer readable medium. The computing system 112 loads the software code or instructions via a direct interface with the computer readable medium or via a wired and/or wireless network. Upon loading and executing such software code or instructions by the computing system 112, the computing system 112 may perform any of the functionality of the computing system 112 described herein, including any steps of the control logic 200 and the method 300 described herein.

The term "software code" or "code" used herein refers to any instructions or set of instructions that influence the operation of a computer or controller. They may exist in a computer-executable form, such as machine code, which is the set of instructions and data directly executed by a computer's central processing unit or by a controller, a human-understandable form, such as source code, which may be compiled in order to be executed by a computer's central processing unit or by a controller, or an intermediate form, such as object code, which is produced by a compiler. As used herein, the term "software code" or "code" also includes any human-understandable computer instructions or set of instructions, e.g., a script, that may be executed on the fly with the aid of an interpreter executed by a computer's central processing unit or by a controller.

This written description uses examples to disclose the technology, including the best mode, and also to enable any person skilled in the art to practice the technology, including making and using any devices or systems and performing any incorporated methods. The patentable scope of the technology is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

## Claims

1. An agricultural harvester (10) comprising
a frame (22),
a feeder (40) extending between a forward end (44) and an aft end (46), the aft end (46) being coupled to the frame (22),
a harvesting implement (34) coupled to the forward end (44) of the feeder (40),
an actuator (102) configured to rotate the harvesting implement (34) relative to the frame (22) between a non-turned position and a turned position,
a sensor (108) configured to capture data indicative of a turn being made by the agricultural harvester (10); and
a computing system (112) communicatively coupled to the sensor (108), the computing system (112) being configured to:
determine a magnitude of the turn based on the data captured by the sensor (108);
compare the determined magnitude of the turn to a minimum threshold value; and
when the determined magnitude exceeds the minimum threshold value, control the operation of the actuator (102) such that the harvesting implement (34) is rotated to the turned position.

2. The agricultural harvester (10) of claim 1, wherein, after rotating the harvesting implement (34) to the turned position, the computing system (112) is further configured to:
determine when the turn is complete based on the data captured by the sensor (108); and
when the turn is complete, control the operation of the actuator (102) such that the harvesting implement (34) is rotated to the non-turned position.

3. The agricultural harvester (10) of claim 1, wherein the actuator (102) is coupled between the feeder (40) and the harvesting implement (34) such that the actuator (102) is configured to rotate the harvesting implement (34) relative to the feeder (40) and the frame (22) between the non-turned position and the turned position.

4. The agricultural harvester (10) of claim 1, wherein the actuator (102) is coupled between the frame (22) and the feeder (40) such that the actuator (102) is configured to rotate the harvesting implement (34) and the feeder (40) relative to the frame (22) between the non-turned position and the turned position.

5. The agricultural harvester (10) of claim 1, wherein, when controlling the operation of the actuator (102), the computing system (112) is configured to:
determine a direction of the turn based on the data captured by the sensor (108); and
determine the turned position based on the determined direction.

6. The agricultural harvester (10) of claim 4, wherein, when controlling the operation of the actuator (102), the computing system (112) is configured to determine the turned position based on the determined magnitude and the determined direction.

7. The agricultural harvester (10) of claim 1, wherein the sensor (108) comprises a steering position sensor (108) configured to capture data indicative of a steering angle of the agricultural harvester (10).

8. The agricultural harvester (10) of claim 1, wherein the sensor (108) comprises a location sensor (108) configured to capture data indicative of a location of the agricultural harvester (10) within a field.

9. A method (300) for steering agricultural harvester (10) implements (34), the method (300) comprising:
receiving, with a computing system (112), sensor data indicative of a turn being made by an agricultural harvester (10);
determining, with the computing system (112), a magnitude of the turn based on the received sensor data;
comparing, with the computing system (112), the determined magnitude of the turn to a minimum threshold value; and
when the determined magnitude exceeds the minimum threshold value, controlling, with the computing system (112), an operation of an actuator (102) of the agricultural harvester (10) such that a harvesting implement (34) of the agricultural harvester (10) is rotated relative to a frame (22) of the agricultural harvester (10) from a non-turned position to a turned position.

10. The method (300) as in claim 9, further comprising:
after rotating the harvesting implement (34) to the turned position, determining, with the computing system (112), when the turn is complete based on the received sensor data; and
when the turn is complete, controlling, with the computing system (112), the operation of the actuator (102) such that the harvesting implement (34) is rotated relative to the frame (22) to the non-turned position.

11. The method (300) of claim 9, wherein controlling the operation of the actuator (102) comprises:
determining, with the computing system (112), a direction of the turn based on the received sensor data; and
determining, with the computing system (112), the turned position based on the determined direction.

12. The method (300) of claim 11, wherein controlling the operation of the actuator (102) further comprises determining, with the computing system (112), the turned position based on the determined magnitude and the determined direction.

13. The method (300) of claim 9, wherein the sensor data corresponds to turn sensor data, the method (300) further comprising:
receiving, with the computing system (112), position sensor data indicative of the position of the harvesting implement (34) along a vertical direction;
determining, with the computing system (112), whether the harvesting implement (34) is at a harvesting position or a non-harvesting position based on the received position sensor data; and
when the harvesting implement (34) is at the non-harvesting position, controlling, with the computing system (112), the operation of the actuator (102) such that the harvesting implement (34) is rotated relative to the frame (22) to the non-turned position.
